# EUROPEAN PATENT APPLICATION

(11) **EP 4 831 502 A1**
(43) Date of publication of application: **28.10.2026**
(21) Application number: 25171938.1
(22) Date of filing: 23.04.2025
(51) Int. Cl.: F16D 55/226, F16D 65/095, F16D 65/02

(54) **BRAKE CARRIER, BRAKE PAD, BRAKE PAD SET AND DISC BRAKE**

(71) Applicant: KB Intellectual Property GmbH & Co. KG, 82049 Pullach (DE)
(72) Inventor: Patil, Akshay Anandrao, 415403 Taluka-Walwa, District-Sangli (IN); Atzinger, Josef, 94036 Passau (DE); Schropp, Josef Johann, 94428 Eichendorf (DE); Hidringer, Michael, 94577 Winzer (DE); Petschke, Andreas, 94127 Neuburg am Inn (DE); Jadhav, Swati, 411018 Pune (IN); Heindl, Martin, 94535 Eging am See (DE); Hauser, Maximilian, 94081 Fürstenzell (DE); Stöger, Christian, 94486 Osterhofen (DE)

(57) **Abstract**

A brake carrier (3) for a disc brake (300) of a vehicle having a brake carrier (2), wherein the brake carrier (3) has two brake carrier horns (13, 14) between which a first pad shaft (11) is arranged to receive and guide a brake pad (100), wherein the brake carrier horns ( 13, 14) provide two lateral supporting surfaces (11a, 11b) which delimit the pad shaft (11) on opposite sides and the brake carrier horns (13, 14) are connected to one another via a pad shaft ground (11c), the pad shaft ground (11c) having, in a central region, a base (143) which projects in relation to the otherwise rectilinear or arcuate contour of the brake-pad shaft ground (11c) in the radial direction to the axis of rotation (D) of the brake carriers (2), the edge of the base (143) being bounded by two guide side faces (141, 142) which are spaced apart from one another by a distance (A1) , which is greater than the extent of the base (143) in the radial direction and a brake pad, a lining set and a disk brake.

## Description

The present invention relates to a brake disk, a brake pad, a brake pad set and a disk brake with reduced oblique wear.

The phenomenon of oblique wear of the inner brake pad of a disc brake, i.e. the brake pad on the clamping side, occurs due to the torque causing conical wear, which is composed of the torque of the circumferential direction and the torque of friction.

The purpose of the present invention is to constructively reduce this oblique wear.

The invention solves the problem by means of a brake carrier with the features of claim 1.

A brake carrier according to the invention for a disc brake of a vehicle having a brake disc has two brake carrier horns, between which a first pad shaft for receiving and guiding a brake pad is arranged.

The brake carrier horns provide two lateral supporting surfaces in the pad shaft, which delimit the pad shaft on opposite sides. The brake carrier horns are connected to each other via a pad shaft ground. The pad shaft ground can be designed as part of a hub curve.

The pad shaft ground has a central area with a base, which can be also referred to as pedestal. Said base is provided with at least one guide side surface. The base projects in a radial direction towards the rotational axis of the brake disc.

The pad shaft is divided by the center plane in a leading side and a trailing side in an actuated state of the brake. The same applies for the brake pad.

The position of the base is such that in an actuated state a brake pad positioned in the pad shaft is supported by the at least one first guide side surface of the base which is positioned at the leading side of the pad shaft and wherein the brake pad is further supported by the one lateral supporting surface limiting the pad shaft at the trailing side of the pad shaft.

The base can preferably be provided with a radial end face which extends from the at least one guide side surface with a length which is greater than the extent of the base in the radial direction.

The base can further preferably be bordered by a second guide side surface. Said guide side surfaces are spaced apart from each other at a distance A. Said distance corresponds to the length of the radial end face. Therefore said distance is greater than the extension of the base in the radial direction.

In a further embodiment the base can be wedge shaped. In this case there is merely one single guide side surface.

A circumferential force that occurs during braking is absorbed by the guide side surface, which significantly reduces diagonal wear, also known as taper wear, of the brake pad during braking.

The distance between the guide surfaces reduces the risk of the base deforming when force is applied at a point or in a concentrated manner.

Further advantageous embodiments of the invention are the subject of the subclaims.

The force absorption by the guide surfaces is further optimized when a center plane of the brake carrier is arranged between the two guide side surfaces.

The base can preferably project with respect to the otherwise rectilinear or arcuate contour of the brake-pad shaft base in the radial direction with respect to the axis of rotation of the brake carriers. This geometry can be easily treated with conventional tools for additional finishing operations such as grinding or smoothing treatments of the surfaces of the pad shaft.

For optimal support and force transmission, it is advantageous if the lateral guide surfaces are arranged at an angle of between 85° and 95°, preferably at an angle of 90°, to the pad shaft ground.

The base can be essentially rectangular in axial sectional view for reasons of ease of manufacture. This allows for optimal force absorption and distribution by the base.

Essentially, in the context of the present invention, means that edges and corners in the transition areas between two surfaces or edges may be rounded. These rounded portions are not taken into account in the definition of the shape within the meaning of the present invention.

The base of the shaft can be part of a hub turn, whereby the base has at least the axial extent of the hub turn and/or extends beyond the axial extent of longitudinally adjacent areas of the hub turn. This increases the force-absorbing surface and thus the support.

The maximum distance between the guide side surfaces can also be at least 20%, preferably at least 30%, of the minimum width of the pad shaft. This further optimizes the force transmission paths between the individual support areas. The carrier can also be designed to be directional, so that the brake pad is pulled in the forward direction of a wheel rotation and pushed in the reverse direction of a wheel rotation. This can also have an influence on the carrier design.

Furthermore, it is advantageous to counteract deformation of the base by making the base solid, i.e. without internal cavities.

To optimize the weight of the brake carrier, it is advantageous if the axial extension of the radial end face of the base decreases towards the center.

There is an increased need to prevent diagonal wear, resp. taper wear, primarily formed on the clamping side. It is therefore advantageous if the first brake pad shaft of the brake carrier is designed as the clamping-side brake pad shaft of a disk brake.

One of the supporting surfaces, or preferably both of the supporting surfaces of the first pad shaft, is divided into at least two parallel sections, which are offset from each other, forming an undercut in each case. The acting oblique forces can act to different degrees in the radial direction. Therefore, it is advantageous if the support is provided at different heights of the covering shaft to different extents, so that oblique forces are absorbed more evenly.

The brake carrier can preferably be provided with at least one undercut being part of one of the two lateral supporting surfaces, preferably of the lateral supporting surface at the leading side of the brake carrier. During actuation the edge between the guide side surface and the redial end face of the base can provide a further axis of rotation when side forces are applied on the brake pad. To avoid an undesired rotation movement of the brake pad, an undercut being part of the support surface of the pad shaft at the leading side can avoid this rotation and provides a further support side preferably provided diagonal or perpendicular to the aforementioned center plane.

In addition, a brake carrier can have a second pad shaft, whereby the supporting surfaces of the second pad shaft have a straight course over more than 90% of their radial extent. Such a pad shaft is significantly easier to manufacture. Since the diagonal wear occurs to a significantly greater extent on the clamping side and is also effectively reduced there, the structure of the brake pad on the reaction side can be designed to be less elaborate.

Furthermore, a brake pad is provided according to the invention, in particular as a corresponding brake pad to the brake carrier according to the invention described above, wherein the brake pad comprises a friction lining and a lining carrier, wherein the lining carrier has two opposing side edges, as well as a top side and a bottom edge opposing the top side. The brake carrier can also have a recess in the bottom edge, which otherwise runs in a straight line or in an arc.

The design of the brake pad results in an increased transfer of force from the inlet-side half of the brake pad, as viewed in the direction of rotation, to the outlet-side half of the brake pad. The support is thus not only provided in the rear half of the brake pad in the direction of rotation, but also on the front half of the brake pad by means of support on the supporting surfaces of the recess, so that lower forces and lever effects also occur and the force distribution of the acting oblique forces is distributed over several support areas. A support is mainly provided in the tangential direction by pulling. The contact at the bottom of the pad causes it to turn out, which requires the second support provided by an undercut which is further explained by the current invention.

Furthermore, the pad carrier has a center plane that runs perpendicular to the plate plane through the plate-shaped pad carrier. The center plane also runs through the recess. It is common to use recesses for pad wear sensors in an edge. The brake pad wear sensor is installed at the leading side of the brake pad due to higher wear at this side.

It is also advantageous if the recess has two edge-side supporting surfaces, the supporting surfaces of the recess being spaced apart from one another at a distance A1 that is greater than the extent of the recess in the radial direction. This allows a force to be absorbed not at a point but over an enlarged area.

The supporting surfaces can be connected to one another via an edge surface of the recess, the edge surface having a centrally arranged, arcuate partial extension which terminates in a step at each end.

The supporting surfaces of the recess are advantageously arranged parallel to one another for uniform support on both sides.

Furthermore, at least one projection is arranged on each of the side edges of the covering carrier, the projections projecting outwards from the covering carrier in directions away from one another.

The supporting surfaces of the recess and the side edges of the brake pad carrier can each be arranged parallel to one another over at least 40%, preferably at least 50%, of their respective longitudinal extent. This results in the distribution of the lateral forces acting on the brake pad over several sub-regions.

It is advantageous if each side edge has two subregions running parallel to each other, with one of the subregions being formed by an end face of the projection. As a result, the lateral support in the pad shaft takes place in differently distributed contact areas of the brake pad.

The brake disk carrier plate can also have a rear side that has a contact surface for a brake piston, preferably a single one, that engages centrally on the brake disk carrier plate, preferably a brake piston with a circular contact surface. The contact surface is designed as a completely flat partial area. If a single brake piston is used for actuation, an especially high degree of oblique wear usually occurs. The invention has particularly great advantages with such disk brake design.

The rear side also has a plurality of grooves and stiffening ribs at the edge of the contact surface. These serve to improve heat dissipation and/or optimize weight.

Furthermore, according to the invention, a brake pad set for a disc brake of a utility vehicle, comprising a brake pad on the clamping side, which is designed as a brake pad according to the invention, and a brake pad on the reaction side, with a bottom edge that extends in a straight or curved line between two side edges in a substantially continuous manner and is particularly free of recesses. The reaction-side brake pad is therefore easier to manufacture. Since oblique forces are already reduced to a greater extent on the clamping side, it is not mandatory to also secure the reaction-side brake pad against oblique wear with the measures described above.

A disc brake for a commercial vehicle according to the invention has a brake carrier according to the invention and a brake caliper that extends over a brake disc and is preferably designed as a sliding caliper, which is arranged on the brake carrier and is equipped with a clamping device for applying the brake.

Furthermore, the disc brake has two brake pads, each of which has a lining carrier and a friction lining attached to it, of which the one, as the brake pad on the clamping side, can be pressed against the brake disc by means of the clamping device on one side of the brake disc, and of which the other, as the brake pad on the reaction side, is arranged on the opposite side of the brake disc. At least the brake pad on the clamping side is preferably the aforementioned brake pad according to the invention. The brake pads can each be inserted into a pad shaft of the brake carrier.

For easy installation of the brake pads, it is advantageous if the brake caliper has a central opening above the brake disc, through which the two brake pads can be inserted into the respective pad shaft, the brake pads being arranged in the direction in the pad shaft so that the respective bottom edge is located opposite the pad shaft ground, preferably directly. Thus, the brake pad corresponds to the brake carrier and the pad shaft arranged therein.

In the following, the invention is explained in more detail with the help of an example with the aid of the accompanying figures. The following figures show
Fig. 1 a sectional view of a partial area of a disc brake according to the invention along the axis of rotation of the brake disc;
Fig. 2 cross-section of the disc brake through a sectional plane perpendicular to the axis of rotation;
Fig. 3 perspective view of a brake carrier of the disc brake;
Fig. 4 perspective view of the disc brake;
Fig. 5 Perspective view of a back plate of the brake pad of the disc brake;
Fig. 6 Schematic representation of the distribution of movement and force of a brake pad according to the invention within a pad shaft during the braking process;
Fig. 7a schematic drawing of the taper wear causing moment in a brake design according to the state of the art; and
Fig. 7b schematic drawing of the force change achieved by the design of the disc-brake of the current invention.

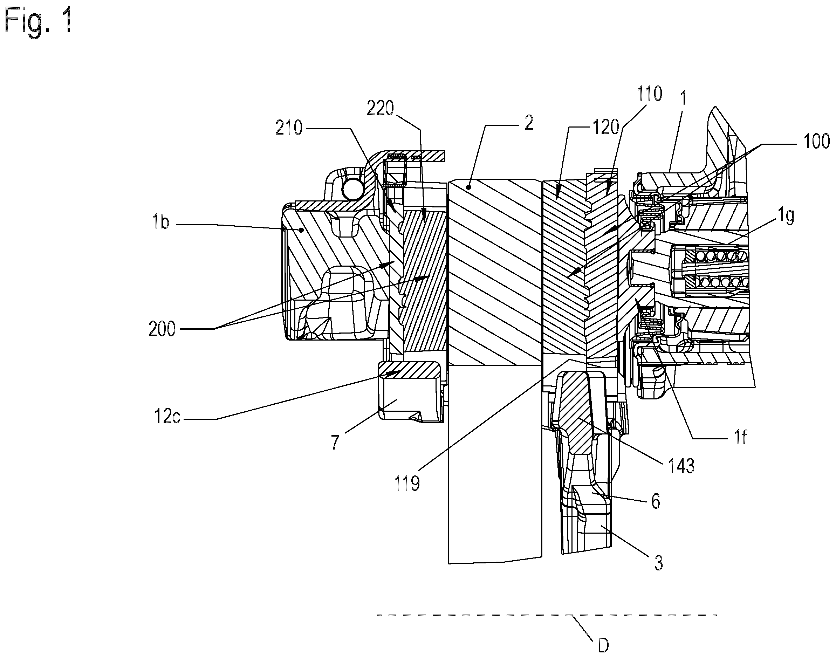

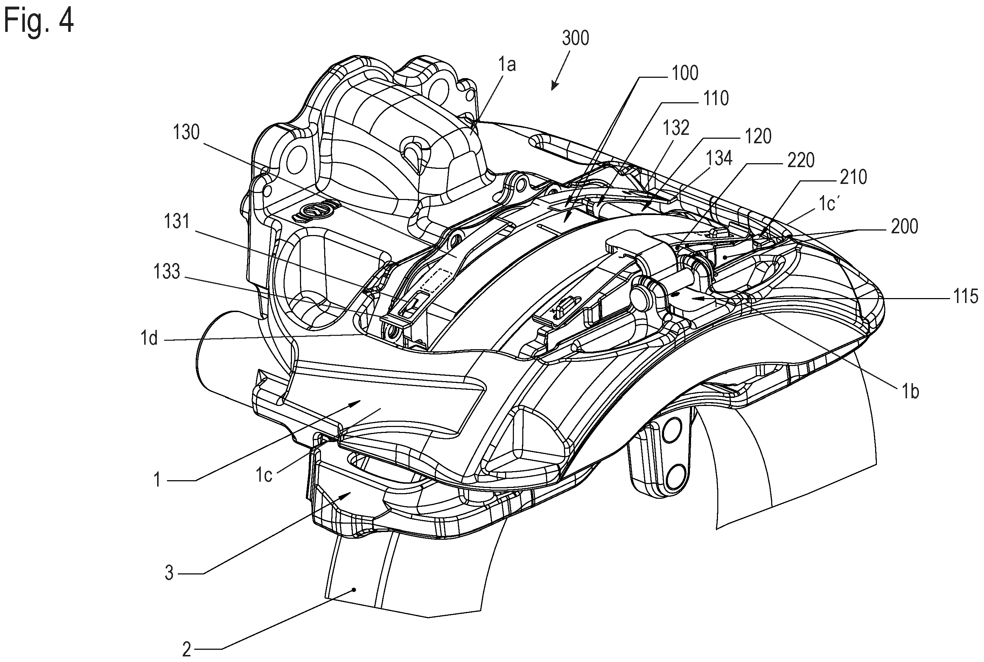

In each of Figs. 1, 2 and 4, a disc brake 300 for a commercial vehicle is shown. The disc brake 300 has a brake caliper 1 that extends over a brake disc 2. The brake disc 2 defines an axis of rotation D. An associated electric or pneumatic actuator (e.g. a brake cylinder) is not shown. The brake caliper 1 is arranged on a brake carrier 3. In the preferred embodiment, the brake caliper 1 is arranged on the brake carrier 3 such that it can be displaced axially in the direction of the brake disc rotation axis D (to which terms such as "axial" and "radial" refer here) in relation to the brake disc 2. For this purpose, the brake caliper 1 is mounted on guide struts 4, which are not visible in detail here, and which are connected to the brake carrier 3, which is held in a fixed position on the vehicle, by means of a frame-like disc grip 5. The disc grip 5 encompasses two hub swings 6 and 7 and two frame parts 8 and 9 connecting the hub swings.

The brake caliper 1 comprises a clamping section 1a, a caliper back 1b and two tie rods 1c, 1c'. The clamping section 1a receives a clamping device 1g of the disc brake 1, which is shown in sections in Fig. 1.

One side of the clamping section 1a runs parallel to the plane of the brake disc 2 on one side of the brake disc 2. The caliper back 1b is arranged on the other side of the brake disc 2, also running parallel to the brake disc 2. The caliper back 1b is connected to the clamping section 1a at one end in each case by a tension strut 1c, 1c'. The tension struts 1c, 1c' run essentially at right angles to the clamping section 1a and to the caliper back 1b.

In this arrangement, the clamping section 1a, the caliper back 1b and the tie rods 1c, 1c' define a central opening 1d between them, which spans the brake disc 2. The opening 1d has an imaginary longitudinal center line, which lies in the plane of the brake disc 2 and connects the imaginary centers of the tie rods 1c, 2c'. In addition, the opening 1d has a further imaginary transverse center line, which connects an imaginary center of the clamping section 1a with an imaginary center of the caliper back 1b.

A brake pad 100, 200 is provided on either side of the brake disc 2. One brake pad 100 - hereinafter also referred to as the brake pad 100 on the clamping side - is arranged on the side of a clamping device. The other brake pad 200 - hereinafter also referred to as the brake pad 200 on the reaction side - is arranged on the side of the brake disc 2 opposite the clamping side.

The central caliper opening 1d above the brake disc is designed and dimensioned so that the two brake pads can be inserted through the caliper opening into the brake carrier, which makes it easy to change the pads.

Braking is carried out by means of the clamping device arranged in the clamping section 1a of the brake caliper 1 in a receiving space there, with a brake lever that is positioned in a dome or the clamping section 1a of the brake caliper 1. The clamping device is actuated by an actuator that is not shown. It is preferably pneumatically or electromechanically actuated. For this purpose, it is preferably provided with a brake cylinder that can be arranged on the brake caliper of the disc brake (not shown here).

The two brake pads 100, 200 can be pressed against the brake disc 2 on both sides during braking. In the case of a sliding caliper brake, the brake pad 100 on the clamping side comes into contact with the brake disc 2 during braking. In the further course of events, the reaction forces that occur cause the brake caliper 1 to be displaced in the opposite direction, taking the reaction-side brake pad 200 with it, until the latter also comes into frictional contact with the brake disc 2.

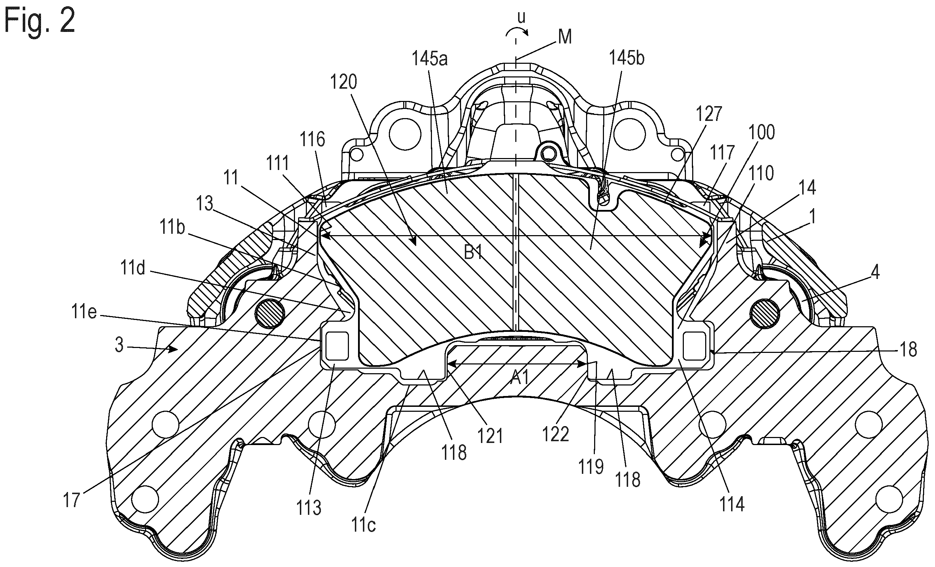

Each of the brake pads 100, 200 - see Figs. 1 and 2 - has a pad carrier 110, 210 and a friction lining 120, 220 attached to it on the side facing the brake disc 2, which is pressed against the brake disc 2 when the brake is applied.

The brake pads 100, 200 can be accessed through the central opening 1d for replacement and maintenance. They can be inserted and removed "from above" radially through this central opening 1d into associated pad shafts. The terms "top" and "bottom" are used below in this sense.

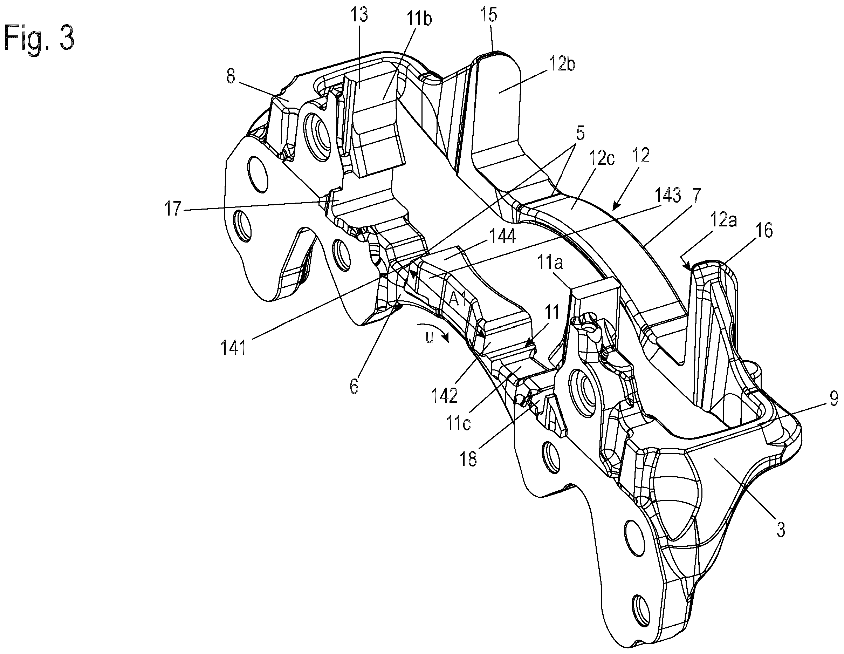

A clamping-side pad shaft 11 for the clamping-side brake pad 100 is formed in the brake carrier 3 on the side of the clamping device or in a clamping-side section of the brake carrier. This can be seen in Fig. 3. It is envisaged that the brake carrier 3 engages in a frame-like manner around an upper edge region of the brake disc 2 and has a clamping-side section and a reaction-side section. Then a second pad shaft 12 for the reaction-side brake pad is preferably also formed in the brake carrier 6 (on the reaction side, see Figs. 1 and 3). Alternatively, the reaction-side pad shaft 12 for the reaction-side brake pad 100 can also be formed in the brake caliper 1 (if the brake carrier has only a clamping-side section and no reaction-side section; not shown here).

The pad shafts 11, 12 are (see Fig. 1, Fig. 3 and 6) each laterally (or in direction of rotation U and against direction of rotation U) limited by supporting surfaces 11a, 11b; 12a, 12b at brake carrier horns 13, 14 and 15, 16 and each have a pad shaft ground 11c, 12c, which is formed between the brake carrier horns 13 and 14 and 15 and 16, respectively.

The brake pad 100 on the clamping side and the brake pad 200 on the reaction side are designed differently here. In turn, the brake pad 100 on the clamping side can be designed in a wide variety of ways. The representation chosen in Fig. 2 and Fig. 3 is particularly advantageous in this respect, but not mandatory.

The brake pad 100 on the clamping side of Figs. 1, 2 and 5 has the pad carrier 110 and the pad material 120 arranged on one side of it, which is directed towards the brake disc 2 when installed. The pad carrier 110 in turn has two side edges 111, 112, which lie parallel to the associated supporting surfaces of the brake carrier horns 13, 14. Furthermore, a bottom edge 118 is provided, which runs between the side edges 111 and 112 and is designed to be largely parallel to the base 11c of the brake pad shaft. In relation to the preferred direction of rotation U (corresponding to forward travel), one side edge 111 is formed on the outlet side and thus serves as a supporting surface when braking from the forward direction of travel. In relation to the preferred direction of rotation U (corresponding to forward travel), the other side edge 112 is formed on the inlet side. It serves as a supporting surface when braking from the reverse direction of travel.

At least one projection 113, 114 projects outwards in opposite directions on the side edges 111, 112 - here at their lower edges in the pad shaft 11. Each of these projections 113, 114 engages in a corresponding undercut 17, 18 of the brake carrier 3 (see Fig. 2), which are each formed in the brake carrier horns 13, 14 of the pad shaft 11 on the clamping side, and has an end face 146 as a partial area of the side edge 111, 112. The installed brake pad 100 on the clamping side is thus radially secured in the brake carrier 3 and also secured against unscrewing during braking. The projections also serve as further support areas during braking. When replacing the brake pad, the new brake pad 100 is inserted radially and then pushed axially so that the projections 113 and 114 engage in the undercuts 17, 18.

Thus, the supporting surfaces 11a, 11b of the first brake pad shaft 11 are divided into at least two parallel subregions 11d, 11e, which are arranged offset to one another, forming an undercut 17, 18 in each case.

The brake pad 100 on the clamping side can also have a pad spring 130. This engages centrally under a holding bracket 115, which is formed integrally on or with the lining carrier 110. The pad spring 130 is radially secured in such a way. Furthermore, the pad spring 130 has a slot 131, 132 on either side of the holding bow, through which tabs/protrusions 116, 117 at both ends of the upper side 127 of the pad carrier 110 pass. In this way, the pad spring 130 is secured axially and against unscrewing. The ends 133, 134 of the pad spring 130 preferably rest in a sprung manner on the brake carrier horns 13, 14. The brake pad 100 on the clamping side is pulled upwards in the pad shaft 12 in the brake carrier 3 by the spring preload.

In this way, the brake pad 100 on the clamping side is well secured and held in the brake carrier 3, in particular radially. It therefore does not require a hold-down clamp fixed to the brake caliper.

The special feature of the brake pad 100 on the clamping side according to the invention lies in a recess 119 in the otherwise straight or curved base edge 118.

The recess 119 essentially has two lateral supporting surfaces 121 and 122 and an intermediate edge surface 123. The supporting surfaces 121 are designed to be symmetrical to one another with respect to a center plane M through the brake pad carrier 110. The center plane M of the pad carrier 110 also corresponds to the center plane of the brake carrier 3.

The supporting surfaces 121, 122 of the recess 119 are spaced apart from one another at a distance A2, which is greater than the extent of the recess in the radial direction.

The brake disk 110 also has a continuous closed contact surface 124 for the contact of one, in particular a single, brake plunger 1f and, at the edge of this, an arrangement of recessed grooves 125 and stiffening ribs 126, which are advantageous for reducing weight and for better heat dissipation.

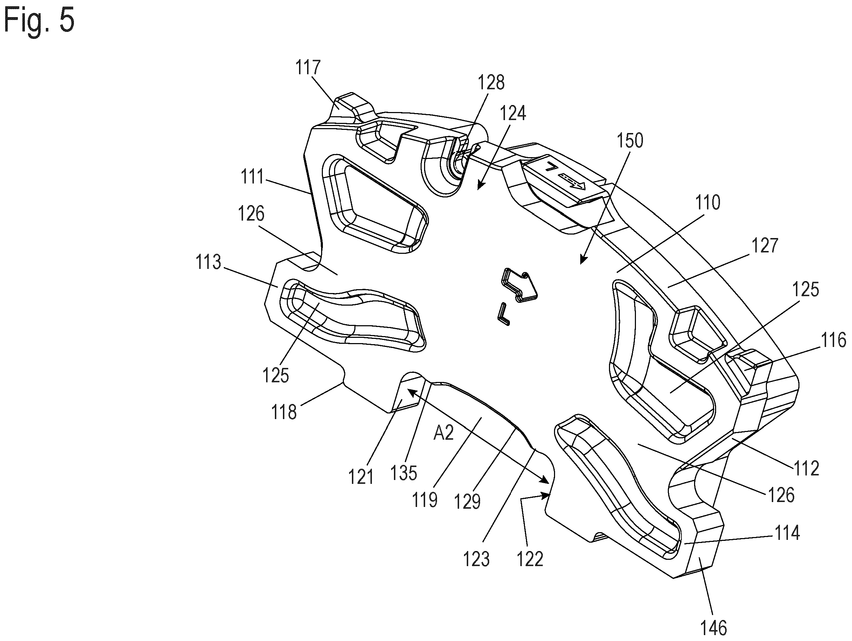

On the top side 127, there is also a recess 128 for accommodating a lining wear sensor. Overall, the pad carrier 110 can have an equal number of recess grooves 125 and/or stiffening ribs 126 along its rear side 150 on one half 145a with respect to the center plane M as on the other half 145b. In Fig. 5, however, the number of recess grooves and stiffening ribs per half is different.

The recess 119 has essentially a rectangular shape with rounded corners. The recess 119 deviates in the area of the edge surface 123 from the rectangular shape in favor of an arcuate partial extension 129 for optimized force distribution. The transition to the curved partial extension 129 is effected on both sides by a step 135.

The recess 119 can be arranged parallel to the guide side surfaces 141, 142 of a base 143 on the pad shaft, in particular in the area of the lateral supporting surfaces 121 and 122 when the brake is not under load.

### Furthermore, the base 143 has a radially terminal end face 144

The base 143 can project radially in the direction of the brake shaft from a central area of an otherwise straight or curved brake shaft ground 11c. At the same time, the brake pad shaft ground 11c is part of the hub curve 6, so that the brake pad carrier 3 has a total of two hub curves 6, 7, which differ in their contour, in particular in height and width, but run essentially parallel to one another in the plan view of the brake carrier.

When the brake carrier 110 is mounted, the base 143 is arranged in the recess 119 so that, if the brake pad tilts by less than 20°, preferably less than 10°, particularly preferably less than 5°, contact occurs between the supporting surfaces 121, 122 and the guide side surfaces 1 41, 142 of the base 143, which prevents further tilting and thus oblique wear.

To achieve this, the two guide side surfaces are spaced apart from each other at a distance A1, which is greater than the extension of the base in the radial direction.

The guide side surfaces 141, 142 are arranged at an angle between 85-95°, in particular vertically, with respect to the pad shaft ground 11c.

The combination of the base 143 and the recess 119 preferably prevents both axial and radial twisting and/or twisting with vector components in both directions.

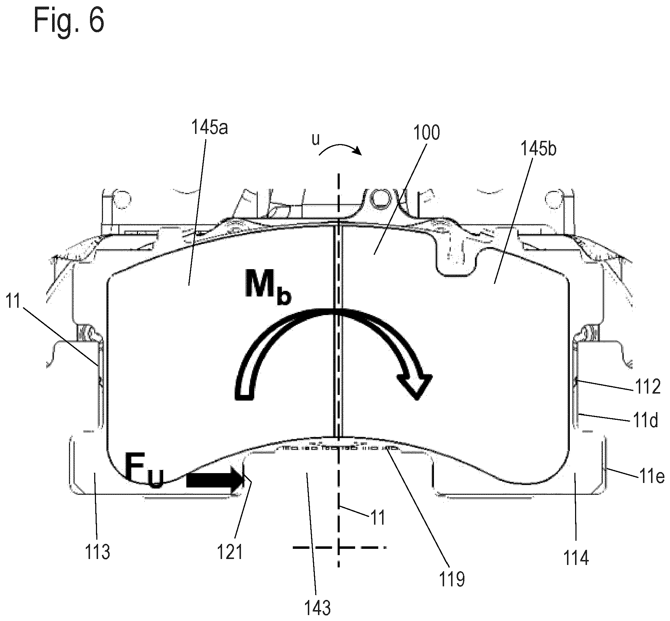

The twisting forces and the associated diagonal wear are emphasized again in the schematic representation of Fig. 6.

The diagonal wear, herein also referred to as taper wear, of the inner side or clamping side brake pad is caused by the wear inducing moment, which is composed of the moment of the circumferential force and the moment of the frictional force.

In the known prior art, the brake disk and the brake pad on the clamping side are connected to one another in such a way that when the brake is applied, the circumferential force FU acts on the rear side at the interface between the inner brake pad and the brake disk in relation to the direction of rotation of the brake disc.

In the context of the present invention, the brake carrier and the inner brake pad are connected to one another in such a way that, when the brake is applied, the circumferential force FU acts in advance at the interface between the recess 119 and the base 143 of the brake pad on the clamping side and the brake carrier with respect to the direction of rotation of the brake disc.

In the present invention, the circumferential force FU is transmitted from the trailing side 145a to the leading side 145b with respect to the direction of rotation of the brake disc, in order to reduce the magnitude of the torque causing the oblique wear, which results in the elimination or alleviation of the wear of the brake pad on the clamping side.

The base 143 and the recess 119 are thus provided to transmit the circumferential force FU with respect to the direction of rotation of the brake disc from the trailing side to the leading side or between the respective halves 145a and 145b of the pad carrier in the direction of rotation.

In this invention, the torque of the frictional force thus acts in the opposite direction to the torque of the circumferential force. In Fig. 6, the braking torque is schematically shown with the reference symbol Mb. The total moment referred to as the oblique wear moment is obtained by subtracting the moment of the frictional force from the moment of the circumferential force. According to the invention, this means that the moment causing oblique wear is reduced. This results in oblique wear being eliminated or reduced.

More specifically the first half 145a of the brake pad in Fig. 6 during a brake event is known as the leading side, wherein the second half 145b of the brake pad is known as the trailing side. In the state of the art the support is provided only at the trailing side of the brake pad. In the current invention however at least a part of the support for the circumferential force is provided by the supporting surface 121 of the base 143 which is positioned in the leading side of the brake pad.

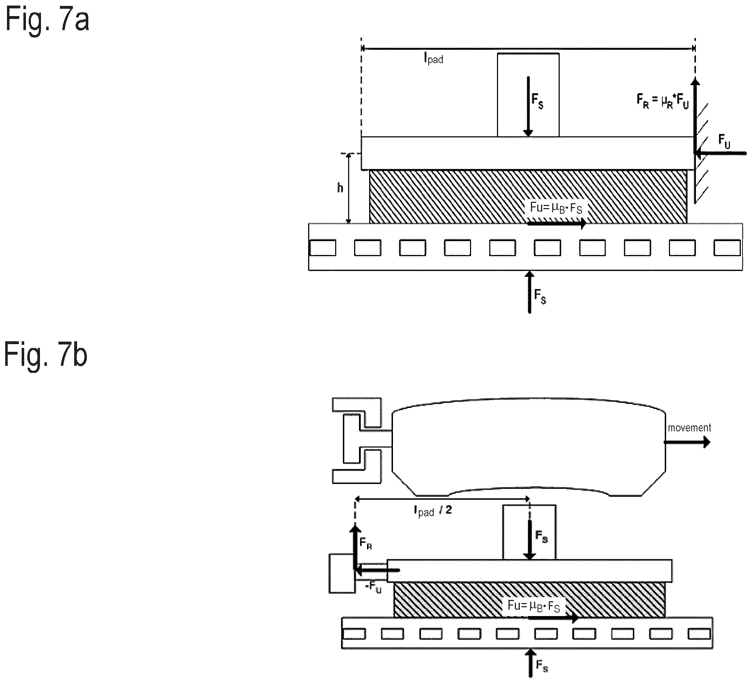

The effect of the opposing moments is further shown and explained in Fig. 7a and 7b.

In Fig. 7a the effect of taper wear is explained by the following formular: ${M}_{S} = {M}_{FU} + {M}_{R}$ ${M}_{S} = {F}_{U} ⋅ h + {F}_{R} ⋅ \frac{{l}_{Belag}}{2}$ ${M}_{S} = {F}_{S} ⋅ {μ}_{B} ⋅ h + {F}_{S} ⋅ {μ}_{B} ⋅ {μ}_{R} \frac{{l}_{Belag}}{2}$ ${M}_{S} = {F}_{S} \left({μ}_{B}⋅h+{μ}_{B}⋅{μ}_{R}\frac{{l}_{Belag}}{2}\right)$ Wherein
- MB: Brake torque
- MS: moment causing taper wear
- MFU: moment from circumferential force
- MR: moment from friction force
- FS: clamping force
- FU: circumferential force
- FR: friction force in pad support
- µB: friction coefficient pad/disc (e.g. 0.375)
- µR: coefficient of friction for pad support (e.g. 0.15)

The circumferential force FU acts at leading side 145a at brake pad and the brake carrier with respect to brake disc rotation direction u. This results in moment known as moment from friction force MR due to friction force FR at trailing side at the brake pad 100 of the clamping side and the subareas 11d and 11e of pad shaft 11 the brake carrier with respect to the brake disc rotation direction u.

Also, because of friction force FU another moment known as moment from circumferential force MFU is applied at the interface between the brake disc 2 and the friction lining 120 of the brake pad 100.

In this invention, moment from friction force MR acts in opposite direction of moment from circumferential force MFU, as shown in Fig. 7b. A total moment known as moment causing taper wear MS here is subtraction of moment from friction force MR from moment from circumferential force MFU. The taper wear can be further expressed by the following formular: ${M}_{S} = {F}_{S} \left({μ}_{B}⋅h-{μ}_{B}⋅{μ}_{R}\frac{{l}_{Belag}}{2}\right)$

Hence in by the inventive design of the disc brake and its parts the moment causing taper wear (MS) is reduced. This results in elimination or mitigation of taper wear. This is achieved by transferring the moment causing taper wear from trailing side 145b to leading side 145a for corresponding brake disc rotation direction u by integrating at least one or more design features at mating interface of brake carrier 3 and the brake pad 100 at the clamping side. Ref. signs 145 a and 145b correspond to leading and trailing sides of the brake pad but are identically used for the leading and trailing sides of the corresponding pad shaft 11 of the brake carrier 3. The same applies for the center plane M.

The base 143 is designed in such a way that it maximizes the distance between the guide sides 141, 142 to at least 20%, preferably at least 30%, of the minimum width Bmin of the covering shaft 11.

In order to achieve a particularly effective support and to optimally prevent twisting, it is advantageous if the length of the rectilinear guide side surfaces 141, 142 of the base 143 in the radial direction is more than 30% of the plate thickness of the covering carrier 110.

The base 143 with the radial end face 144 can project over more than 90% of its longitudinal extent parallel to the longitudinal extent of the covering carrier 110, preferably with a uniform height with respect to the covering shaft ground 11c.

For ease of production, it is advantageous if the lateral supporting surfaces 121, 122 are arranged at a 90° angle to an adjacent section of the floor edge 118.

The recess 119 advantageously extends over the entire plate thickness of the covering support 110.

The base 143 also extends at least over the entire width of the base 11c of the covering shaft. In particular, the base 143 extends in the axial direction even in some areas beyond the axial extent of the base of the covering shaft.

In this case, the front face 144 of the base is arranged perpendicular to one or more sections of the supporting surfaces 11a and 11b.

In addition, the brake anchor according to the invention is preferably designed in one piece and preferably manufactured in a molding process.

The brake pad shown in Fig. 5 is the brake pad 100 on the clamping side. The brake pad 200 on the reaction side can have supporting surfaces which have a straight course over more than 90% of their radial extent. The contour of the brake pad thus corresponds to the contour of the pad shaft in Fig. 3. A projection 113, 114, as in the brake pad 100 on the clamping side, is not provided; the same applies to the recess 119.

The brake pad on the reaction side is thus easier to manufacture.

### Reference signs

- 1: Brake caliper
- 1a: Clamping section
- 1b: Caliper back
- 1c, 1c': Tie rods
- 1d: Opening / caliper opening
- 1f: Brake plunger
- 1g: Clamping device
- 2: Brake disc
- 3: Brake carrier
- 4: Guide bar
- 5: Disc wrap
- 6: Hub curve
- 7: Hub curve
- 8: frame part
- 9: frame part
- 11: pad shaft
- 11a, 11b: supporting surface
- 11c: pad shaft ground
- 11d: subarea (supporting surface)
- 11e: subarea (supporting surface)
- 12: pad shaft
- 12a, 12b: supporting surface
- 12c: pad shaft ground
- 13, 14, 15, 16: Brake disk flange
- 17, 18: Undercut
- 100, 200: Brake pad
- 110, 210: Lining carrier
- 111, 112: Side edge
- 113, 114: Protrusion
- 115: Holding clamp
- 116, 117: Lugs/protrusions
- 118: Floor edge
- 119: Recess
- 120, 220: Friction lining
- 121, 122: Supporting surface
- 123: Edge surface
- 124: Contact surface
- 125: Recessed groove
- 126: Reinforcing rib
- 127: Top side
- 128: Recess
- 129: Arc-shaped partial extension
- 130: Pad spring
- 131, 132: Slot
- 133, 134: End
- 135: Step
- 141, 142: Guide side surface
- 143: base
- 144: Front face (base)
- 145a, 145b: Half of the brake pad with 145a leading side and 145b trailing side
- 146: Front face (projection)
- 150: Rear face
- 300: Disc brake

- D: axis of rotation
- U: direction of rotation
- M: center plane
- FU: circumferential force
- Mb: braking torque
- Bmin: minimum distance of supporting surface 12a, 12b

- A1: distance
- A2: distance
- B1: width

## Claims

1. Brake carrier (3) for a vehicle disc brake (300) having a brake carrier (3), the brake carrier (3) having two brake carrier horns (13, 14) between which a first pad shaft (11) for receiving and guiding a brake pad (100) is arranged, the brake carrier horns (13 , 14) provide two lateral supporting surfaces (11a, 11b) which bound the pad shaft (11) on opposite sides, and the brake carrier horns (13, 14) are connected to one another via a pad shaft ground (11c), **characterized in that** the pad shaft ground (11c) has, in a central region, a base (143) with at least one guide side surface (141), which projects in the radial direction with respect to the axis of rotation (D) of the brake disc (2), wherein the pad shaft (11) is divided by the center plane (M) in a leading side (145a) and a trailing side (145b) in an actuated state of the brake (300), and wherein the guide side surface (141) is positioned in the pad shaft (11) such that in said actuated state a brake pad (100) positioned in the pad shaft (11) is supported by the at least one guide side surface (141) of the base (143), which is positioned at the leading side (145a) of the pad shaft (11) and wherein the brake pad (100) is further supported by the one lateral supporting surface (11b) limiting the pad shaft (11) at the trailing side (145b) of the pad shaft (11).

2. Brake carrier according to claim 1, **characterized in that** the base (143) has a radial end face (144) which extends from the at least one guide side surface (141) with a length (A1) which is greater than the extent of the base (143) in the radial direction.

3. Brake carrier according to claim 1 or 2, **characterized in that** the center plane of the brake carrier (3) is arranged between the at least one and a second guide side surface (141, 142) of the base (143).

4. Brake carrier according one of the preceding claims, **characterized in that** the radial end face (144) of the base (143) connects the two guide side faces (141, 142) to one another.

5. Brake carrier according to one of the preceding claims, **characterized in that** the base (143) projects with respect to the otherwise rectilinear or arcuate contour of the brake-pad shaft base (11c) in the radial direction with respect to the axis of rotation (D) of the brake carriers (2).

6. Brake carrier according to one of the preceding claims, **characterized in that** the guide side surfaces (141, 142) are arranged at an angle of between 85° and 95° with respect to the brake-pad shaft ground (11c).

7. Brake carrier according to one of the preceding claims, **characterized in that** the base (143) has essentially a rectangular shape in axial sectional view.

8. Brake carrier according to one of the preceding claims, **characterized in that** the pad shaft ground (11c) is part of a hub curve (6), the base (143) having at least the axial extent of the hub curve (6) and/or extending beyond the axial extent of longitudinally adjacent regions of the hub curve (6).

9. Brake carrier according to one of the preceding claims, **characterized in that** the maximum distance between the guide side surfaces (141, 142) is at least 20%, preferably at least 30%, of the minimum width (B1) of the pad shaft (11).

10. Brake carrier according to one of the preceding claims, **characterized in that** the axial extent of the radial end face (144) of the base (143) decreases towards the center.

11. Brake carrier according to one of the preceding claims, **characterized in that** the first pad shaft (11) of the brake carrier (3) is designed as the pad shaft (11) on the clamping side of a disc brake (300).

12. Brake carrier according to one of the preceding claims, **characterized in that** one supporting surface (11a, 11b) or preferably both supporting surfaces (11a, 11b) of the first pad shaft (11) is/are subdivided in each case into at least two mutually parallel subregions (11d, 11e) which are arranged offset with respect to one another, forming in each case a (17, 18).

13. Brake carrier according to one of the preceding claims, **characterized in that** the brake carrier (3) has a second pad shaft (12), the supporting surfaces (12a, 12b) of the second pad shaft (12) having a rectilinear profile over more than 90% of their radial extent.

14. Brake carrier according to one of the preceding claims, **characterized in that** the brake carrier (3) is provided with at least one undercut (17, 18) being part of one of the two lateral supporting surfaces (11a, 11b), preferably of the lateral supporting surface (11a) at the leading side of the brake carrier (3)

15. Brake pad (100), in particular as a corresponding brake pad (100) for a brake carrier (3) according to one of the preceding claims, comprising a friction lining (120) and a lining carrier (110), the lining carrier (110) having two opposing side edges (111, 112), as well as a top side (127) and a bottom edge (118) opposite the top side, **characterized in that** the lining carrier has a recess (119) in the bottom edge (118), which otherwise extends in a straight line or in an arc.

16. Brake pad according to one of the preceding claims, **characterized in that** a center plane (M) of the lining carrier (110) runs through the recess (119).

17. Brake pad according to one of the preceding claims, **characterized in that** the recess has two edge-side supporting surfaces (121, 122), the supporting surfaces (121, 122) of the recess (119) being spaced apart from one another at a distance (A2) which is greater than the extent of the recess (119) in radial direction.

18. Brake pad according to one of the preceding claims, **characterized in that** the supporting surfaces (121, 122) are connected to one another via an edge surface (123), the edge surface (123) having a centrally arranged, arcuate partial extension (129) which terminates in a step (135) in each case.

19. Brake pad according to one of the preceding claims, **characterized in that** the supporting surfaces (121, 122) of the recess (119) are arranged parallel to one another.

20. Brake pad according to one of the preceding claims, **characterized in that** in each case at least one projection (113, 114) of the lining carrier (110) projects outwards in opposite directions at the side edges (111, 112).

21. Brake pad according to one of the preceding claims, **characterized in that** the supporting surfaces (121, 122) of the recess (119) and the side edges (111, 112) of the lining carrier (3) are arranged parallel to each other in each case over at least 40%, preferably at least 50%, of their respective longitudinal extent.

22. Brake pad according to one of the preceding claims, **characterized in that** in each case one side edge (111, 112) has two partial regions running parallel to one another, one of the partial regions being formed by an end face (146) of the respective projection (113, 114).

23. Brake pad according to one of the preceding claims, **characterized in that** the lining carrier (110) has a rear side (150) which has a contact surface (124) for the contact of a brake plunger (1f), preferably a single brake plunger (1f), acting centrally on the lining carrier (110), preferably a brake plunger (1f) having a circular contact surface and that the rear side (150) has a plurality of grooves (125) and stiffening ribs (126) at the edge of the contact surface (124).

24. Lining set for a disc brake (300) of a commercial vehicle, comprising a brake pad (100) on the clamping side according to one of the preceding claims 14-22 and a brake pad (200) on the reaction side with a bottom edge that extends in a substantially continuous straight or arcuate manner between two side edges and is in particular free of recesses.

25. Disc brake (300) for a commercial vehicle, with a brake carrier (3) according to one of the preceding claims 1-14 and a brake caliper (1) that engages over a brake disc (2), is preferably designed as a sliding caliper, is arranged on the brake carrier (3) and with a clamping device (1g) for applying the brake, and with two brake pads (100, 200) of a lining set for a disc brake (300), preferably of a lining set for a disc brake according to claim 24, which each have a lining carrier (110, 210) and a friction lining (120, 220) fastened on it, of which the one, as the brake pad (100) on the clamping side, can be pressed by means of the clamping device (1g) on one side of the brake disc (2) against the brake disc (2) and of which the other, as the reaction-side brake pad (200), is arranged on the opposite side of the brake disc (2), and which can each be inserted into a pad shaft (11, 12) of the brake carrier (3).

26. Disc brake according to one of the preceding claims, **characterized in that** the brake caliper (1) has a central caliper opening (1d) above the brake disc (2), through which the two brake pads (100, 200) can be inserted into the respective pad shaft (11, 12), the brake pads (100, 200) are arranged in the direction in the pad shaft (11, 12) such that the respective bottom edge (119) is located opposite the pad shaft ground (11c), preferably directly.
